# EUROPEAN PATENT SPECIFICATION

(11) **EP 3 799 390 B1**
(45) Date of publication and mention of the grant of the patent: **04.09.2024**
(21) Application number: 18924598.8
(22) Date of filing: 25.12.2018
(51) Int. Cl.: G06F 9/50, H04L 67/02, H04L 67/61

(54) **PREEMPTIVE SCHEDULING BASED RESOURCE SHARING USE METHOD, SYSTEM AND**
VERFAHREN UND SYSTEM ZUR GEMEINSAMEN NUTZUNG VON RESSOURCEN AUF DER GRUNDLAGE VON PRÄEMPTIVER PLANUNG
PROCÉDÉ, SYSTÈME ET DISPOSITIF D'UTILISATION DE PARTAGE DE RESSOURCES À BASE D'ORDONNANCEMENT PRÉEMPTIF

(30) Priority: 25.06.2018 CN 201810659298
(43) Date of publication of application: 31.03.2021
(73) Proprietor: Transwarp Technology (Shanghai) Co., Ltd., Shanghai 200233 (CN)
(72) Inventor: SUN, Hongjian, Shanghai 200233 (CN)
(74) Representative: HGF
(86) International application number: PCT/CN2018/123464
(87) International publication number: WO 2020/000944

(56) References cited:
- AU-A4- 2018 100 381
- CN-A- 102 073 546
- CN-A- 102 073 546
- CN-A- 103 810 046
- CN-A- 104 838 360
- CN-A- 104 838 360
- CN-A- 108 769 254
- US-A1- 2009 276 781
- US-A1- 2014 068 624
- US-A1- 2017 357 531

## Description

### TECHNICAL FIELD

The present application relates to the field of computer technologies, and for example, to a resource sharing use method and system based on preemptive scheduling, and a storage medium.

### BACKGROUND

In a resource sharing distributed system, multiple tenants share and use resources, and meanwhile resources used by each tenant need to be limited to a certain extent, so as to ensure that each tenant can have resources to be used, and avoid the phenomenon of resource starvation of the tenant. A scheduler in the distributed system effectively schedules jobs or tasks of multiple tenants, thereby ensuring jobs or tasks of each tenant to be stably and quickly executed and meanwhile resources in the distributed system to be fully utilized.

A traditional distributed management system provides multiple scheduling strategies to ensure that the tasks of multiple tenants may be evenly distributed to physical nodes in the distributed system, and then the distributed tasks are run by the physical nodes. However, there is a phenomenon that resources are not fully utilized in the manner of processing the tasks.

Further relevant technologies are also known from US 2017/357531 A1 (ZHANG YANG [CN] ET AL), 14 December 2017 (2017-12-14); US 2009/276781 A1 (CHAN WAIMAN [US] ET AL), 5 November 2009 (2009-11-05); and CN 104838360 A (MICROSOFT TECHNOLOGY LICENSING, LLC), 12 August 2015 (2015-08-12).

### SUMMARY

Embodiments of the present disclosure provide a preemptive scheduling based resource sharing use method, a system and a device, which can improve the utilization rate of resources. The features of the method and system according to the present invention are defined in the independent claims. Further improvements are provided in the dependent claims.

In a first aspect, an embodiment of the present application provides a method for creating a task. The method includes: an application programming interface (API) server acquires a creation request of the task; and when the API server detects that a quota of a tenant to which the task belongs contains a resource matching with a priority of the task, and the matching resource satisfies a creation condition of the task, the task is created according to the creation request.

In a second aspect, an embodiment of the present application provides a method for scheduling a task. The method includes: a scheduler acquires a current task to be scheduled from a task scheduling queue, and acquires a task having a priority greater than or equal to a priority of the current task on each physical node to form a node-task mapping table; the scheduler determines a target physical node satisfying a preset screening condition according to the mapping table and the preset screening condition; and the scheduler binds the current task with the target physical node, and sends binding information to an API server.

In a third aspect, an embodiment of the present application provides a method for preempting a task. The method includes: when a physical node processes a target task to be run, a task list of tasks running on the physical node is acquired; the physical node detects whether remaining resources of the physical node satisfy resources required for running the target task; when the physical node detects that the remaining resources of the physical node do not satisfy the resources required for running the target task, the physical node sequentially moves at least one task, having a priority lower than a priority of the target task, in the task list into a queue to be removed in a priority order from low to high until the remaining resources obtained after the physical node executes remaining tasks in the task list satisfy the resources required for running the target task, and the target task is adopted to preempt the at least one task in the queue to be removed; and the physical node calls an execution environment to run the target task.

In a fourth aspect, an embodiment of the present application provides a preemptive scheduling based resource sharing use method. The method includes: an API server acquires a creation request of a task; when the API server detects that a quota of a tenant to which the task belongs contains a resource matching with a priority of the task, and the matched resource satisfies a creation condition of the task, the task is created according to the creation request; a scheduler acquires a task created by the API server to form a task scheduling queue; the scheduler acquires a current task to be scheduled from the task scheduling queue, and acquires a task, having a priority greater than or equal to a specified priority of the current task, on each physical node to form a node-task mapping table; the scheduler determines a target physical node best satisfying a preset screening condition according to the mapping table and the preset screening condition; the scheduler binds the current task with the target physical node, and sends binding information to the API server; the physical node monitors the binding information of the task and the physical node in the API server, and the corresponding task is acquires based on the monitored binding information to form a task queue; when the physical node processes a target task to be run in the task queue, a task list of tasks running on the physical node is acquired; the physical node detects whether remaining resources of the physical node satisfy resources required for running the target task; when the remaining resources does not satisfy the resources required for running the target task, the physical node sequentially moves at least one task, having a priority lower than a priority of the target task, in the task list into a queue to be removed in a priority order from low to high until the remaining resources obtained after the physical node executes remaining tasks in the task list satisfy the resources required for running the target task, and the target task is adopted to preempt the at least one task in the queue to be removed; and the physical node calls an execution environment to run the target task.

In a fifth aspect, an embodiment of the present application provides an API server. The API server includes a request acquisition module and a task creation module. The request acquisition module is configured to acquire a creation request of a task. The task creation module is configured to create the task according to the creation request, when it is detected that a quota of a tenant to which the task belongs contains a resource matching with a priority of the task, and the matching resource satisfies a creation condition of the task.

In a sixth aspect, an embodiment of the present application provides a scheduler. The scheduler includes a mapping table forming module, a screening module and a binding module. The mapping table forming module is configured to: acquire a current task to be scheduled from a task scheduling queue, and acquire a task, having a priority greater than or equal to a priority of the current task, on each physical node to form a node-task mapping table. The screening module is configured to determine a target physical node satisfying a preset screening condition according to the mapping table and the preset screening condition. The binding module is configured to: bind the current task with the target physical node, and send binding information to an API server.

In a seventh aspect, an embodiment of the present application provides an apparatus for preempting a task. The apparatus includes a task list acquisition module, a detection module, a preemption module and a task execution module. The task list acquisition module is configured to acquire a task list of tasks running on a physical node in a case of processing a target task to be run. The detection module is configured to detect whether remaining resources on the physical node satisfy resources required for running the target task. The preemption module is configured to: when the detection module detects that the remaining resources on the physical node do not satisfy the resources required for running the target task, sequentially move at least one task, having a priority less than a priority of the target task, in the task list into a queue to be removed in a priority order from low to high until the remaining resources obtained after the physical node executes remaining tasks in the task list satisfy the resources required for running the target task, and adopt the target task to preempt the at least one task in the queue to be removed. The task execution module is configured to call an execution environment to run the target task.

In an eighth aspect, an embodiment of the present application provides a preemptive scheduling based resource sharing use system. The system includes the API server, the scheduler, and the apparatus for preempting the task provided in the embodiments of the present application.

In a ninth aspect, an embodiment of the present application provides a device. The device includes one or more processors and a storage apparatus for storing one or more programs. The one or more programs, when executed by the one or more processors, cause the one or more processors to implement one of the method for creating the task provided in the embodiments of the present application, the method for scheduling the task provided in the embodiments of the present application, or the method for preempting the task provided in the embodiments of the present application.

In a tenth aspect, an embodiment of the present application provides a computer-readable storage medium. The computer-readable storage medium stores a computer program thereon. The program, when executed by a processor, implements the method for creating the task provided in the embodiments of the present application, or the method for scheduling the task provided in the embodiments of the present application, or the method for preempting the task provided in the embodiments of the present application.

According to the technical scheme provided by the embodiments of the present application, the priority of the resource quota of the tenant is set, and the priority of the task is matched with the resource of each priority under the tenant, so that it is determined whether the task is created, the tenant can preferentially use the resource when the resources are in short supply, and avoiding the phenomenon that when the tenant abuses resources having a high priority, so a task having a low priority cannot continuously acquire the resource, and thus the resource shortage occurs. The scheduler screens the physical nodes based on the priority of the task and the preset screening condition to screen out a most appropriate physical node, and schedules the current task to be scheduled to the most appropriate physical node. When the resources are in short supply, only logical resource preemption is performed and the resources are not immediately preempted, so the method of delaying the preemptive scheduling can logically yield resources for the task having the high priority, and continuously run the preempted task when the resources are not fully utilized, thereby improving the utilization rate of resources. When the physical node processes the target task to be run, and if the remaining resources of the physical node do not satisfy a condition required for running the target task, the physical node can process an important task preferentially on the basis of preempting the task having the low priority, and thus improving the utilization rate of resources.

### BRIEF DESCRIPTION OF DRAWINGS

FIG. 1 is a flowchart of a method for creating a task provided by an embodiment of the present application.
FIG. 2 is a flowchart of a method for scheduling a task provided by an embodiment of the present application.
FIG. 3 is a flowchart of a method for scheduling a task provided by an embodiment of the present application.
FIG. 4 is a flowchart of a method for preempting a task provided by an embodiment of the present application.
FIG. 5 is a flowchart of a method for preempting a task provided by an embodiment of the present application.
FIG. 6 is a flowchart of a resource sharing use method based on preemptive scheduling provided by an embodiment of the present application.
FIG. 7 is a structural block diagram of an API server provided by an embodiment of the present application.
FIG. 8a is a structural block diagram of a scheduler provided by an embodiment of the present application.
FIG. 8b is a schematic structural diagram of a scheduling system provided by an embodiment of the present application.
FIG. 9 is a structural block diagram of an apparatus for preempting a task provided by an embodiment of the present application.
FIG. 10 is a structural block diagram of a resource sharing use system based on preemptive scheduling provided by an embodiment of the present application.
FIG. 11 is a schematic structural diagram of a device provided by an embodiment of the present application.

### DETAILED DESCRIPTION

The present application will be described below in conjunction with the accompanying drawings and embodiments. It should be understood that the specific embodiments described herein are merely used for explaining the present application and are not intended to limit the present application. It should also be noted that, for ease of description, only some, but not all, of the contents related to the present application are shown in the drawings.

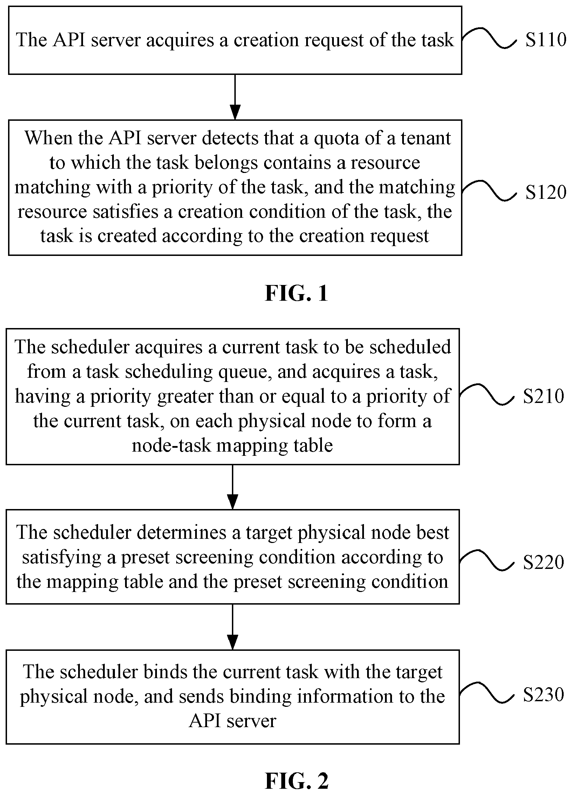

FIG. 1 is a flowchart of a method for creating a task provided by an embodiment of the present application. The method is applied to an application programming interface (API) server (API Server), and is executed by the API server. The API server is an assembly in a cluster management platform, and is implemented in a software and/or hardware manner. The cluster management platform is a platform that manages a large number of resources in a cluster, and the cluster management platform includes, but is not limited to, Kubernets and Mesos, and may be integrated in multiple computer devices. As shown in FIG. 1, the method for creating the task provided by an embodiment of the present application includes S 110 to S 120.

In S 110, the API server acquires a creation request of a task.

The method provided by the embodiments of the present application is applied to the cluster, multiple physical nodes are contained in the cluster, resources on each physical node are resources shared by multiple tenants, and the multiple physical nodes may be managed by the cluster management platform. The cluster management platform allocates tasks to the physical nodes to enable these physical nodes to execute respective tasks. The cluster management platform is integrated in multiple computer devices, the multiple computer devices are operated by users, a user logs in the cluster management platform and submit the creation request of the task, and the API server in the cluster management platform acquires the creation request of the task submitted by the user and creates the task. Task scheduling is performed by a scheduler in the cluster management platform, and the tasks are reasonably allocated to corresponding physical nodes, so the tasks are performed by these physical nodes.

The API server is an assembly in the cluster management platform, which completes the creation of the task, provide rich functional plug-ins, improve the management of the cluster, and the like.

The API server acquires the creation request of one task submitted by the user, in an embodiment, acquires a request for creating one application submitted by the user. A priority of the task is set when the user submits the creation request of the task.

In S 120, when the API server detects that a quota of a tenant to which the task belongs contains a resource matching with a priority of the task, and the matching resource satisfies a creation condition of the task, the task is created according to the creation request.

The users are divided into several groups in the management granularity, each group is referred to as one tenant, the quota is preset for each tenant as required, and the quota is a group of resources. In an embodiment, this group of resources includes a central processing unit (CPU), a memory, a graphics processing unit (GPU), a field programmable gate array (FPGA), an artificial intelligence (AI) chip, a priority of the processor, a priority of the memory, a priority of the GPU, a priority of the FPGA, a priority of the AI chip, etc., and a resource quota is preset for each tenant. By reasonably setting of the quota, the tenant is authorized to use resources having a proper priority, so that the tenant can preferentially use the resources when the resources are in short supply, thus limiting a phenomenon that the tenant abuses a resource having a high priority, a task having a low priority cannot continuously acquire the resource, thus the resource shortage occurs.

When the user submits the creation request of the task through the cluster management platform, each task carries identification information, the API server identifies the tenant to which each task belongs according to the identification information and determine whether the quota of the tenant contains the resource matching with the priority of the task, and if the quota of the tenant contains the resource matching with the priority of the task, then the API server continues to determine whether the matching resource satisfies the creation condition of the task. When the matching resource satisfies the creation condition of the task, the task is created.

The creation condition is a number of CPUs and/or occupancy of the memory, and also is other conditions. In an embodiment, when the user submits the creation request of the task, the priority of the task is set to be the high priority through the cluster management platform, and then a priority of the resource required by the task is also the high priority, such as the task requiring 10 CPUs having the high priority. And if the quota of the tenant to which the task belongs contains the CPU having the high priority, and the number of the CPUs having the high priority is greater than or equal to 10, then the task is created.

In one implementation of the present application, the method provided by the embodiments of the present application is applied in a Kubernetes environment. The step in which the server acquires the creation request of the task includes that the API server acquires a creation request of a task, i.e., a pod. The step in which when the API server detects that the quota of the tenant to which the task belongs contains the resource matching with the priority of the task, and the matching resource satisfies the creation condition of the task, the task is created according to the creation request includes that when the API server detects that a quota of a tenant, i.e., namespace to which the task, i.e., the pod belongs contains a quota value of a resource matching with a priority corresponding to the pod, and the quota value satisfies the creation condition of the task, i.e., the pod, the API server creates the pod according to the creation request of the pod.

The pod is a smallest and also a simplest unit that may be created and deployed in the Kubernetes. One pod represents one process running in the cluster. The pod is an assembly in the Kubernetes, in an embodiment, one application may be created, a process may be started. A container (in some cases several containers) of an application is encapsulated in the pod, and the container may store independent network Internet protocol (IP) addresses, policy options for managing how the container runs, etc. The pod represents a unit of deployment, i.e., one instance applied in the Kubernetes, which may be combined together by one or more containers to share resources. A creation of one pod may be a creation of one application, and so on.

The namespace is an abstract collection of a group of resources and objects. In an embodiment, the namespace may be used for dividing subjects within the Kubernetes system into different project groups or user groups, and the namespace is commonly used for isolating different tenants or users. In the Kubernetes, the quota may be used for resource management and resource restriction, and a magnitude of the quota value may represent how many resources are, in an embodiment, the resources set under one tenant are 20 CPUs having the high priority, and the quota value in the namespace may be 20, i.e., the quota value may represent a number of resources.

According to the method for creating the task provided by the embodiments of the present application, when the creation request of the task is acquired, whether the quota of the tenant to which the task belongs contains the resource matching with the priority of the task is detected, and whether the resource matching with the priority of the task satisfies the creation condition of the task is detected; and when these two conditions are satisfied (the quota of the tenant to which the task belongs contains the resource matching with the priority of the task, and the resource also satisfies the creation condition of the task), the task is created. In this embodiment, the priority of the resource quota of the tenant is set, the priority of the task is matched with the resource of each priority under the tenant to which the task belongs, thus determining whether the task is created, which can enable the tenant to preferentially use the resource when the resources are in short supply, and meanwhile avoid a phenomenon that the tenant abuses resources having the high priority, causing that the task having the low priority cannot continuously acquire the resources, and thus the resource shortage occurs.

FIG. 2 is a flowchart of a method for scheduling a task provided by an embodiment of the present application. The method is applied to a scheduler, which is an assembly of the cluster management platform, and is implemented in a software and/or hardware manner. The cluster management platform is a platform for managing a large number of hardware resources in a cluster, the cluster management platform includes, but is not limited to, Kubernetes and Mesos, and is integrated in multiple computer devices. The method provided by the embodiments of the present application is applied to the following environment: multiple physical nodes are contained in the cluster, resources on the multiple physical nodes are resources shared by multiple tenants, and the multiple physical nodes are managed by the cluster management platform, and the cluster management platform allocates tasks to the physical nodes to enable the physical nodes to execute respective tasks. The cluster management platform is integrated in multiple computer devices, the multiple computer devices are operated by a user, the user logs in the cluster management platform and submit a creation request of the task, and an API server in the cluster management platform acquires the creation request of the task submitted by the user and creates the task, task scheduling is performed by the scheduler in the cluster management platform, and the tasks are reasonably allocated to respective physical nodes, and the tasks are performed by the physical nodes. The embodiments of the present application are applied to the stage of the scheduler performing the task scheduling.

As shown in FIG. 2, the technical schemes provided by the embodiments of the present application include S210-S230.

In S210, the scheduler acquires a current task to be scheduled from a task scheduling queue, and acquires a task, having a priority greater than or equal to a priority of the current task, on each physical node to form a node-task mapping table.

The scheduler is an assembly of the cluster management platform, monitors tasks created in the API server from the API service, and reads tasks from the API server. The read tasks form the task scheduling queue. The scheduler schedules the tasks according to a sequence of the tasks in the task scheduling queue.

The physical nodes may be various physical machines, and the scheduler acquires, from each physical node, resource information (including all resources and available resources) and a task queue of tasks running on each physical node. Each task in the task queue has a priority. When the scheduler acquires the current task to be scheduled from the task scheduling queue, tasks, having the priority greater than or equal to the priority of the current task, on each physical node are acquired to form the node-task mapping table. In an embodiment, if the priority of the current task is the high priority, and tasks greater than or equal to the high priority on a physical node 1 include a task 1, a task 2 and a task 3, then the scheduler acquires the task 1, the task 2 and the task 3 on the physical node 1 to form the node-task mapping table. The task having the priority greater than or equal to the priority of the current task on the physical node includes: a task running on the physical node and having the priority greater than or equal to the priority of the current task, and a task to be run on the physical node and having the priority greater than or equal to the priority of the current task.

In S220, the scheduler determines a target physical node best satisfying a preset screening condition according to the mapping table and the preset screening condition.

The scheduler performs the screening from the node-task mapping table according to the preset screening condition to screen out the target physical node best satisfying the preset screening condition. The preset screening condition includes a matching condition between resources required by the current task and remaining resources on the physical node, a matching condition between a port required by the current task and a port on the physical node, and the like.

In one implementation of the present application, the step in which the scheduler determines the target physical node best satisfying the preset screening condition according to the mapping table and the preset screening condition includes steps described below, the scheduler screens out, from the mapping table, physical nodes satisfying a first-stage screening condition to form a node group, the physical nodes of the node group are scored according to the mapping table and a second-stage optimization condition, and a physical node with a highest score is screened out to serve as the target physical node.

The first-stage screening condition is different from the second-stage optimization condition. In an embodiment, the first-stage screening condition is the matching condition between the port required by the current task and the port on the physical node, whether the physical node has a special label, and the like, while the second-stage optimization condition is the matching condition between the resources required by the current task and the remaining resources on the physical node, and the second-stage optimization condition includes one or more conditions. When the second-stage optimization condition includes multiple conditions, a weight may be set for each condition, and a score of the physical node is determined according to the weight.

The implementation is exemplified as follows, if the first-stage screening condition is that the physical node needs a label of the GPU, and the second-stage optimization condition is the matching condition between the resources required by the current task and the remaining resources on the physical node. The scheduler selects physical nodes having the GPU, according to the node-task mapping table and the acquired information of the physical node, to form the node group. The scheduler determines whether the remaining resources on a physical node in the node group satisfy the resource condition required by the current task, physical nodes which do not satisfy the condition will be removed, and physical nodes which satisfy the resource condition required by the current task are scored, the more the remaining resources on the physical node are, the higher the score of the physical node is, and the physical node with the highest score is the target physical node. The method for screening the target physical node includes but is not limited to the method described above.

Through the above two times of screening, the physical node with the highest score is screened out to be served as the target physical node, that is, the physical node with the highest score is screened out to serve as the most appropriate physical node. Compared with a case of only one time of screening, the processing amount of data in each time of screening may be reduced, and the efficiency of the task scheduling may be improved.

In S230, the scheduler binds the current task with the target physical node, and sends binding information to the API server.

The scheduler binds the current task with the screened physical node (namely, the target physical node) best satisfying the preset screening condition, and sends the binding information to the API server, so that each physical node reads the task executed by itself from the API server.

According to the embodiments of the present application, the scheduler screens the multiple physical nodes based on the priority of the task and the preset screening condition to screen out the most appropriate physical node (namely, the target physical node) corresponding to each task, and schedules the current task to be scheduled to the most appropriate physical node. When the resources are in short supply, only the logical resource preemption is performed and the resources are not immediately preempted, so that the method of delaying a preemptive scheduling can logically yield resources for the task having the high priority, and continuously reserve the preempted task when the resources are not fully utilized, thereby improving the utilization rate of the resources.

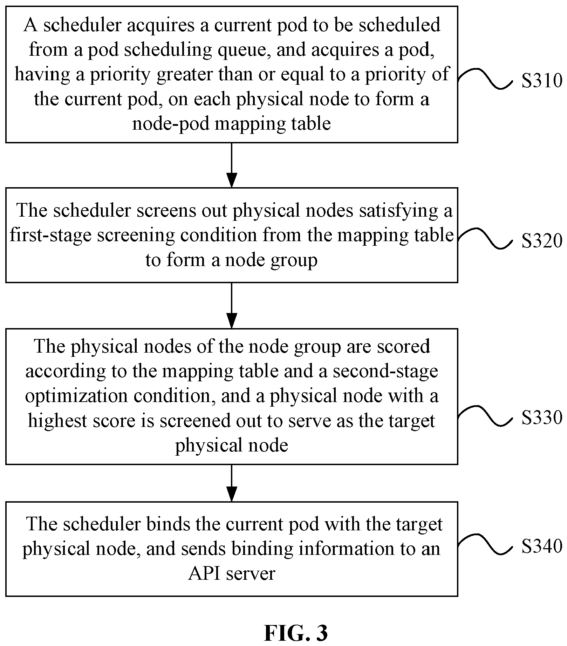

FIG. 3 is a flowchart of a method for scheduling a task provided by an embodiment of the present application. The method provided in this embodiment may be applied to a kubernetes system. As shown in FIG. 3, the technical scheme provided in this embodiment includes S310-S340.

In S310, a scheduler acquires a current pod to be scheduled from a pod scheduling queue, and acquires a pod, having a priority greater than or equal to a priority of the current pod, on each physical node to form a node-pod mapping table.

In S320, the scheduler screens out physical nodes satisfying a first-stage screening condition from the mapping table to form a node group.

In S330, the physical nodes of the node group are scored according to the mapping table and a second-stage optimization condition, and a physical node with a highest score is screened out to serve as the target physical node.

In S340, the scheduler binds the current pod with the target physical node, and sends binding information to an API server.

Therefore, the scheduler screens the physical nodes based on the priority of the task and the preset screening condition to screen out the most appropriate physical node, and schedules the current task to be scheduled to the most appropriate physical node. When the resources are in short supply, only the logical resource preemption is performed and the resources are not immediately preempted, so that the method of delaying a preemptive scheduling can logically yield resources to the task having the high priority, and continuously reserve the preempted task when the resources are not fully utilized, thereby improving the utilization rate of the resources.

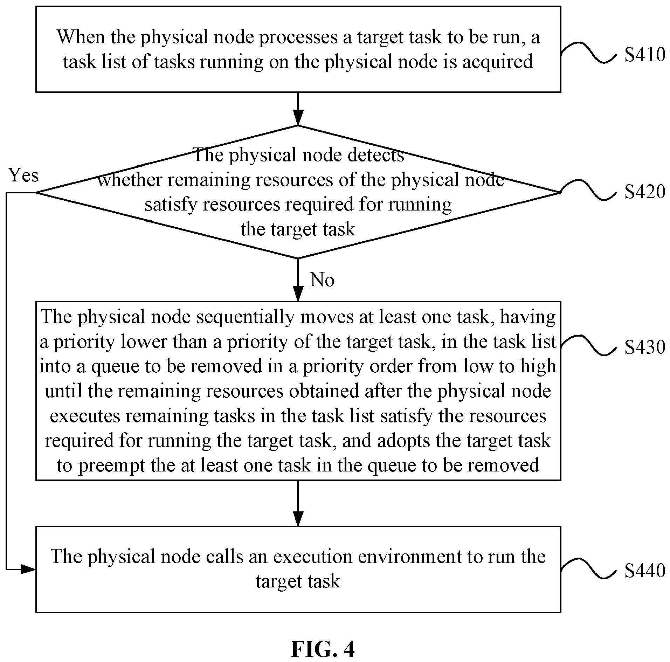

FIG. 4 is a flowchart of a method for preempting a task provided by an embodiment of the present application. The method is performed by an apparatus for preempting a task. The apparatus is implemented by software and/or hardware and is integrated in a computer device. The method for preempting the task provided by the embodiments of the present application is applicable to a scenario of a physical node processing the task. As shown in FIG. 4, the technical scheme provided by the embodiments of the present application includes S410-S440.

In S410, when the physical node processes a target task to be run, a task list of tasks running on the physical node is acquired.

The physical node is a computer device, such as a physical machine. The physical node acquires corresponding tasks by monitoring the binding information between tasks and physical nodes in the API server, and a task queue is formed by the acquired tasks. The physical node sequentially processes the tasks according to a sequence of the tasks in the task queue. The currently processed task is referred to as the target task to be run. When the physical node processes the target task to be run, the physical node acquires the task list of tasks running on the physical node. The task list records information about the task running on the physical node. There are one or more tasks running on the physical node

In S420, the physical node detects whether remaining resources of the physical node satisfy resources required for running the target task.

If the physical node detects that the remaining resources of the physical node do not satisfy the resources required for running the target task, S430 is executed, and if the physical node detects that the remaining resources of the physical node satisfy the resources required for running the target task, S440 is executed.

In this step, the resources required for running the target task may include the CPU, the memory and the like. The remaining resources of the physical node are understood as available resources on the physical node. In an embodiment, if a number of CPUs remaining on the physical node is 10, and the memory is 1G, while the CPU required for running the target task is 10 and the memory is 2G, then the remaining resources on the physical node cannot satisfy the resources required for running the target task.

In S430, the physical node sequentially moves at least one task, having a priority lower than a priority of the target task, in the task list into a queue to be removed in a priority order from low to high (this physical node does not execute the at least one task moved into the queue to be removed) until the remaining resources obtained after the physical node executes remaining tasks in the task list satisfy the resources required for running the target task, and the target task is used to preempt the at least one task in the queue to be removed.

In this step, if the physical node detects that the remaining resources of the physical node satisfy the resources required for running the target task, an execution environment is directly called, and the target task is run. If the physical node detects that the remaining resources of the physical node do not satisfy the resources required for running the target task, the tasks in the task list are sorted in the priority order from low to high, and tasks having the priority lower than the priority of the target task are moved into the queue to be removed in the priority order from low to high until the remaining resources obtained after the physical node executes the remaining tasks in the task list satisfy the resources required for running the target task, the target task is used to preempt a resource of the at least one task in the queue to be removed, namely, the at least one task in the queue to be removed stops running.

In a process of moving the at least one task in the task list into the queue to be removed, if the remaining resources on the physical node do not satisfy a condition required for running the target task, the target task is refused to be executed.

It should be noted that the execution of the tasks in the queue to be removed is not stopped in the process of moving the at least one task having the priority lower than the priority of the target task in the task list into the queue to be removed, and when it is determined that the remaining resources obtained after the physical node executes the remaining tasks in the task list satisfy the resources required for running the target task, the execution of the tasks in the queue to be removed is stopped.

To illustrate this step, if there are a total of 5 tasks in the task list (5 tasks running on the physical node), i.e., A, B, C, D and E, respectively, with priorities of 1, 2, 3, 4, and 5, respectively, the tasks in the task list are sorted in the priority order from low to high as A, B, C, D and E. A priority of the target task to be processed is 4. If the remaining resources on the physical node do not satisfy the resource condition required for running the target task, then tasks (A, B and C respectively), having a priority lower than the priority of the target task, in the task list running on the physical node are sequentially moved into the queue to be removed in the priority order from low to high, namely, A is firstly moved into the queue to be removed, then it is determined that whether remaining resources obtained after the physical node runs the B, C, D and E in the task list satisfy the resource condition required for running the target task. If the remaining resources obtained after the physical node runs the B, C, D and E in the task list satisfy the resource condition required for running the target task, running A is preempted by using the target task, namely, A is stopped.

After A is moved into the queue to be removed, if the remaining resources obtained after the physical node runs B, C, D and E in the task list do not satisfy the resource condition required for running the target task, then B is continuously moved into the queue to be removed, and it is detected again that whether the remaining resources obtained after the tasks C, D and E in the task list are run satisfy the resource condition required for running the target task, and the above determination step is repeated, until it is detected that the remaining resources obtained after the remaining tasks in the task list are run satisfy the resource condition required for running the target task. If the priority of the task in the task list is not lower than the priority of the target task (namely, the tasks A, B and C in the task list are all moved into the queue to be removed and only the tasks D and E are left), remaining resources obtained after the physical node runs the tasks D and E in the task list do not satisfy the resource condition required for running the target task, then the target task is refused to be run.

In S440, the physical node calls an execution environment to run the target task.

In the embodiments of the present application, when the physical node processes the target task to be run, if the remaining resources of the physical node do not satisfy the condition required for running the target task, a task having a low priority is preempted, so that the physical node may preferentially process an important task, and the utilization rate of the resources may be improved.

On the basis of the above embodiments, the method for preempting the task further includes steps described below, the physical node acquires resource usage information at each set time interval; when the physical node determines that the resource usage information reaches a preset limitation condition, a task in the task list is moved into the queue to be removed in the priority order from low to high until the resource usage information, determined after the physical node executes the task in the task list, does not reach the preset limitation condition, and the task in the queue to be removed is stopped.

In an embodiment, the task in the task list is a task running on the current physical node. Each physical node acquires the resource usage information at each set time interval, and determines whether the resource usage information reaches the preset limitation condition for determining whether a task preemption needs to be triggered. If the resource usage information reaches the preset limitation condition, the task preemption is triggered, and if the resource usage information does not reach the preset limitation condition, the task preemption does not need to be triggered. A process of preempting the task includes following steps: the tasks in the task list are sorted according to the priority, and the tasks in the task list are sequentially moved into the queue to be removed in the priority order from low to high until resource usage information determined after the physical node executes tasks in the task list does not reach the preset limitation condition; and the task in the queue to be removed is stopped.

The preset limitation condition may be that the resource usage reaches a set value, and may also be other limitation conditions. In an embodiment, if the resource usage of the physical node reaches the set value, the task preemption is triggered.

Therefore, the physical node triggers the task preemption according to the resource usage information, so that the utilization rate of the resources may be improved, and when the resources are in short supply, resources may be preempted by the task having the low priority, thus preferentially processing an important task.

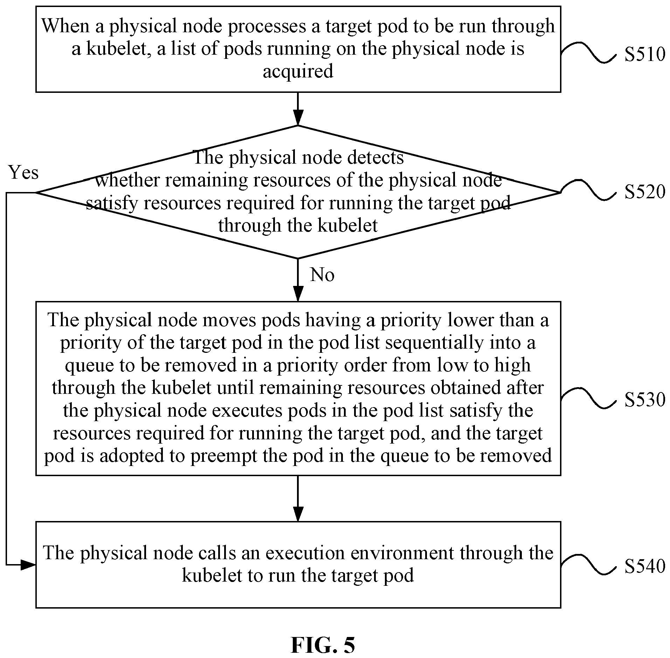

FIG. 5 is a flowchart of a method for preempting a task provided by an embodiment of the present application. The method provided by the embodiments of the present application runs in a Kubernetes system. As shown in FIG. 5, the method provided by the embodiments of the present application includes 5510-5540.

In S510, when a physical node processes a target pod to be run through a kubelet, a list of pods running on the physical node is acquired.

The kubelet is an assembly of the Kubernetes system and may monitor pods, volumes required for mounting the pods, download a secret of the pods, run containers in the pods through docker/rkt, periodically execute a liveness probe defined for the containers in the pods, and report a state of the pod to other assemblies of the system, and a state of the node.

In S520, the physical node detects whether remaining resources of the physical node satisfy resources required for running the target pod through the kubelet.

If the physical node detects that the remaining resources of the physical node do not satisfy the resources required for running the target pod, S530 is performed, and if the physical node detects that the remaining resources of the physical node satisfy the resources required for running the target pod, S540 is performed.

In S530, the physical node moves pods having a priority lower than a priority of the target pod in the pod list sequentially into a queue to be removed in a priority order from low to high through the kubelet until remaining resources obtained after the physical node executes pods in the pod list satisfy the resources required for running the target pod, and the target pod is adopted to preempt the pod in the queue to be removed.

In S540, the physical node calls an execution environment through the kubelet to run the target pod.

Therefore, when the physical node processes the target pod to be run, if the remaining resources of the physical node do not satisfy a condition required for running the target pod, a pod having a low priority (the priority is lower than the priority of the target pod) is preempted, so that the physical node can preferentially process an important task (in this embodiment, the important task refers to the target pod), and the utilization rate of resources may be improved.

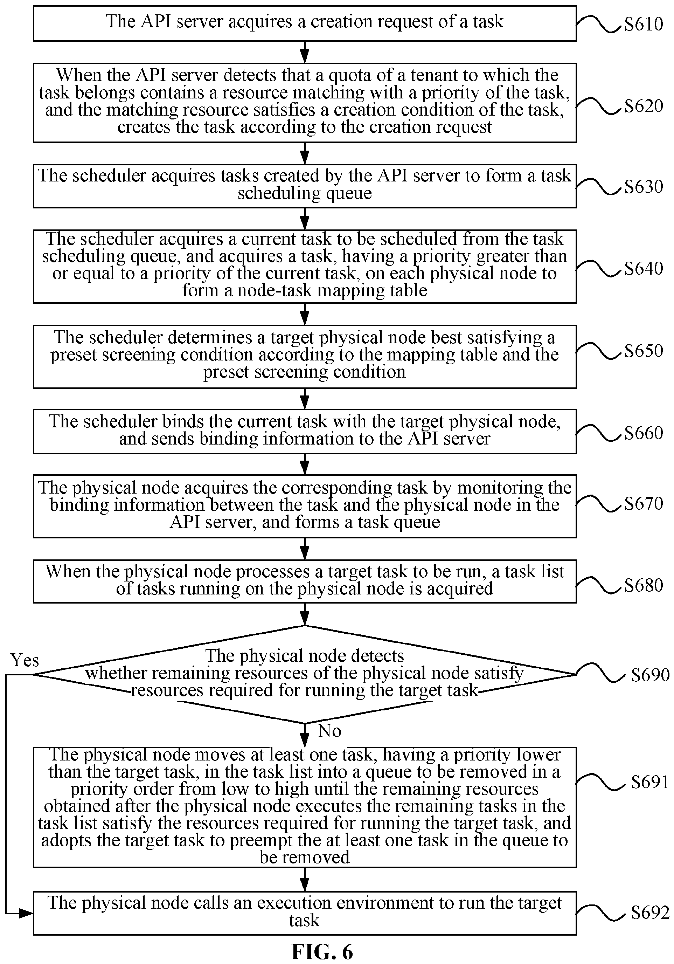

FIG. 6 is a flowchart of a preemptive scheduling based resource sharing use method provided by an embodiment of the present application. The method is performed by a preemptive scheduling based resource sharing use system. The system is implemented through software and/or hardware. The method provided by the embodiments of the present application is applied to a cluster, multiple physical nodes are contained in the cluster, resources on each physical node are resources shared by multiple tenants, the multiple physical nodes is managed by a cluster management platform. The cluster management platform allocates tasks to the physical nodes to enable the physical nodes to execute respective tasks. The cluster management platform is integrated in multiple computer devices, the multiple computer devices are operated by a user, the user logs in the cluster management platform and submit a creation request of a task, and an API server in the cluster management platform acquires the creation request of the task submitted by the user and creates the task. A task scheduling is performed by a scheduler in the cluster management platform, and the tasks are reasonably allocated to corresponding physical nodes, so the tasks are performed by the physical nodes.

As shown in FIG. 6, the technical scheme provided by the embodiments of the present application includes S610-S692.

In S610, the API server acquires a creation request of a task.

In S620, when the API server detects that a quota of a tenant to which the task belongs contains a resource matching with a priority of the task, and the matching resource satisfies a creation condition of the task, the task is created according to the creation request.

In S630, the scheduler acquires the task created by the API server to form a task scheduling queue.

The API server acquires the creation request of the task in real time and creates the task for the creation request satisfying the condition, so there is at least one task in the API server. The scheduler acquires all tasks created by the API server and forms the task scheduling queue by the tasks.

In S640, the scheduler acquires a current task to be scheduled from the task scheduling queue, and acquires a task having a priority greater than or equal to a priority of the current task on each physical node to form a node-task mapping table.

The scheduler sequentially schedules the tasks according to an order sequence of the tasks in the task scheduling queue. The current task to be scheduled refers to a task currently scheduled by the scheduler in the task scheduling queue.

In S650, the scheduler determines a target physical node best satisfying a preset screening condition according to the mapping table and the preset screening condition.

In S660, the scheduler binds the current task with the target physical node, and sends binding information to the API server.

The scheduler sequentially schedules the tasks in the task scheduling queue to obtain binding information of each task in the task scheduling queue and corresponding target physical node thereof.

In S670, the physical node monitors the binding information of the task and the physical node in the API server, and acquires the corresponding task to form a task queue.

The physical node monitors the binding information in the API server, and determines the task corresponding to the physical node through the target physical node in the binding information. A number of the task is one or more, and the one or more tasks form the task queue.

In S680, when the physical node processes a target task to be run in the task queue, a task list running on the physical node is acquired.

The physical node sequentially processes the tasks according to the order sequence of the tasks in the task queue. The target task to be run refers to a task currently processed by the physical node in the task queue.

In S690, the physical node detects whether remaining resources of the physical node satisfy resources required for running the target task.

If the physical node detects that the remaining resources of the physical node do not satisfy the resources required for running the target task, S691 is performed, and if the physical node detects that the remaining resources of the physical node satisfy the resources required for running the target task, S692 is performed.

In S691, the physical node moves a task having a priority lower than the target task in the task list into a queue to be removed in a priority order from low to high until the remaining resources obtained after the physical node executes the task in the task list satisfy the resources required for running the target task, and the target task is adopted to preempt a task in the queue to be removed.

In S692, the physical node calls an execution environment to run the target task.

The Kubernetes of version 1.3 in the related art is a resource sharing scheme based on a quality of service for performing the management of shared resources. The quality of service from high to low is Guarantee, Burstable and Best Effort. A task with the Best Effort may be scheduled and run when cluster resources are not fully used. When the cluster resources are in short supply, the task with the Best Effort is preempted preferentially. This scheme does not consider the part of the task scheduling, when the cluster scheduling is full, resources cannot be vacated for a task with a high quality of service, a number of the tasks with the Best Effort in the tenants cannot be limited, and a preempted sequence of the tasks with the Best Effort cannot be distinguished.

According to the priority-based scheduling scheme introduced by the Kubernetes of version 1.8 in the related art, the priority of the task may be set, and when resources are in short supply, the scheduler may preempt a task having a low priority, so that sufficient resources are provided for a task having a high priority. However, in this scheme, a task preemption occurs in the scheduler, that is, the task preemption occurs when cluster logic scheduling is full, a case where resources are not fully utilized exists in a cluster, the utilization rate of the resources is not high, and a number of tasks having different priorities cannot be accurately limited.

Compared with the scheduling scheme in the related art, the method provided by the embodiments of the present application has advantages that: priorities of resource quotas of the tenants are set, a number of tasks having various priorities under each tenant may be accurately limited, and since the priority of the task is set, when the tasks are preempted, the preempted sequence of the tasks may be distinguished. According to the embodiments of the present application, the task preemption based on the priority occurs in the physical node and does not occur in the scheduler, resources may be logically vacated for the task having the high priority, the preempted task continues to be run when the resources are not fully utilized, whereby the utilization rate of the resources may be improved.

According to the method provided by the embodiments of the present application, the priority of the resource quota of the tenant is set, and the priority of the task is matched with the resource of multiple priorities under the tenant, so that whether the task is created is determined, the tenant can preferentially use the resource when the resources are in short supply, and it is avoided the phenomenon that the tenant abuses the resource having a high priority so that a task having a low priority cannot continuously acquire the resource, thus causing the starvation to occur. The scheduler screens the physical node based on the priority of the task and the preset screening condition to screen out a most appropriate physical node, and schedules the current task to be scheduled to the most appropriate physical node. When the resources are in short supply, only the logical resource preemption is performed and the resources are not immediately preempted, so that the method of delaying a preemptive scheduling can logically yields resources for the task having the high priority, and continuously run the preempted task when the resource is not fully utilized, thereby improving the utilization rate of the resources. When the physical node processes the target task to be run, if the remaining resources of the physical node do not satisfy a condition required for running the target task, the physical node can process an important task preferentially on the basis of preempting the task having the low priority, improving the utilization rate of the resources.

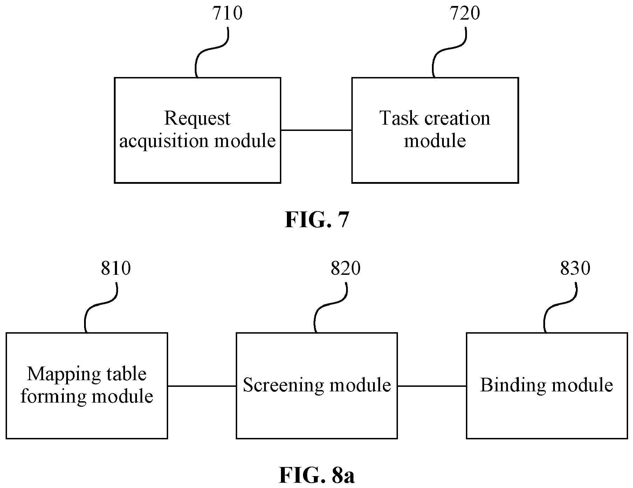

FIG. 7 is a structural block diagram of an API server provided by an embodiment of the present application. As shown in FIG. 7, the API server includes a request acquisition module 710 and a task creation module 720.

The request acquisition module 710 is configured to acquire a creation request of a task.

The task creation module 720 is configured to create the task according to the creation request, when it is detected that a quota of a tenant to which the task belongs contains a resource matching with a priority of the task, and the matched resource satisfies a creation condition of the task.

In an embodiment, the apparatus is applied to a Kubernetes system, and the request acquisition module 710 is configured to acquire a creation request of a pod.

The task creation module 720 is configured to create the pod according to the creation request of the pod when it is detected that a quota of a namespace to which the pod belongs contains a quota value of a resource matching with a priority of the pod, and the quota value satisfies a creation condition of the pod.

The apparatus for creating the task described above executes the method for creating the task provided by any embodiment of the present application, and has function modules and beneficial effects corresponding to the method for creating the task.

FIG. 8a is a structural block diagram of a scheduler provided by an embodiment of the present application. As shown in FIG. 8a, the scheduler includes a mapping table forming module 810, a screening module 820 and a binding module 830.

The mapping table forming module 810 is configured to acquire a current task to be scheduled from a task scheduling queue, and acquire a task having a priority greater than or equal to a priority of the current task on each physical node to form a node-task mapping table.

The screening module 820 is configured to determine a target physical node best satisfying a preset screening condition according to the mapping table and the preset screening condition.

The binding module 830 is configured to bind the current task with the target physical node, and send binding information to an API server.

In an embodiment, the screening module 820 is configured to: screen out, from the mapping table, physical nodes satisfying a first-stage screening condition to form a node group; and score, according to the mapping table and a second-stage optimization condition, the physical nodes of the node group, and screen out a physical node with a highest score to be served as the target physical node.

In an embodiment, the apparatus is applied to a Kubernetes system, and the mapping table forming module 810 is configured to acquire a current pod to be scheduled from a pod scheduling queue, and acquire a pod greater than or equal to a specified priority of the current pod on each physical node to form a node-pod mapping table.

Correspondingly, the binding module 830 is configured to bind the current pod with the target physical node, and send binding information to the API server.

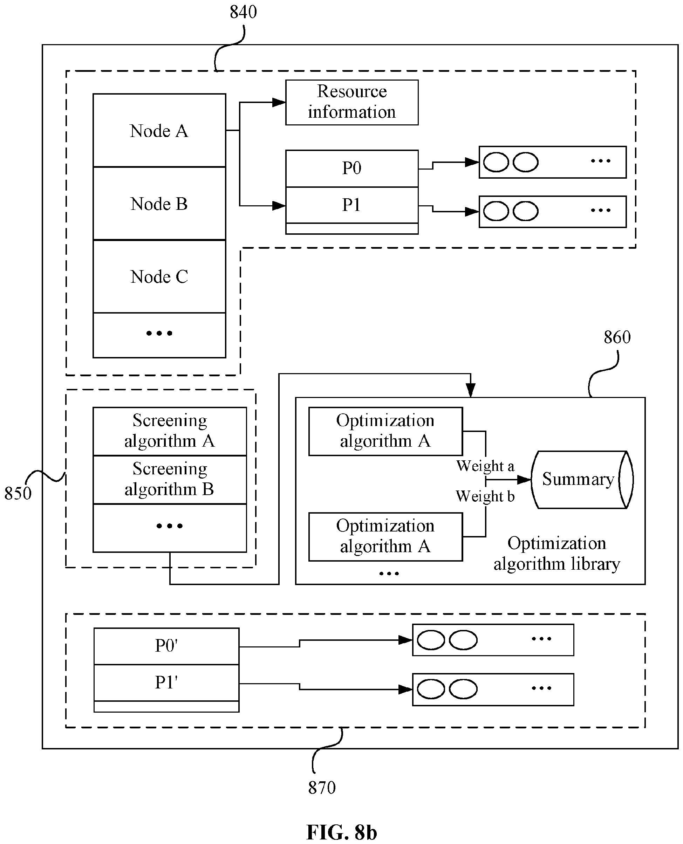

A structure of the scheduler may also be other structural forms, so that the method for scheduling the task is executed. In an embodiment, a scheduling system is included in the scheduler, as shown in FIG. 8b, the scheduling system includes four parts: a node information list 840, a screening algorithm library 850, an optimization algorithm library 860, and an unscheduled queue 870.

The node information list 840 is configured to record currently available physical node information, including resource information (all resources and available resources) on the physical node, as well as a task queue that is already run on the physical node. This part of the information is key information for appointing the scheduling method, and needs to be synchronized in real time to ensure that the scheduling system has comprehensive cognition on resources and tasks

The screening algorithm library 850 is configured to predefine a variety of algorithms for screening the physical nodes to ensure physical nodes not satisfying an execution condition of the task to be removed.

The preferred algorithm library 860 is configured to predefine algorithms of multiple optimization nodes and weights of the algorithms, and select the physical node with the highest score calculated by the optimization algorithm as a scheduling node, namely the target physical node.

The unscheduling queue 870 is configured to be a queue formed by unscheduled tasks and is a priority queue to ensure a task having a high priority to be firstly scheduled.

The apparatus described above executes the method for scheduling the task provided by any embodiment of the present application, and has function modules and beneficial effects corresponding to the method for scheduling the task.

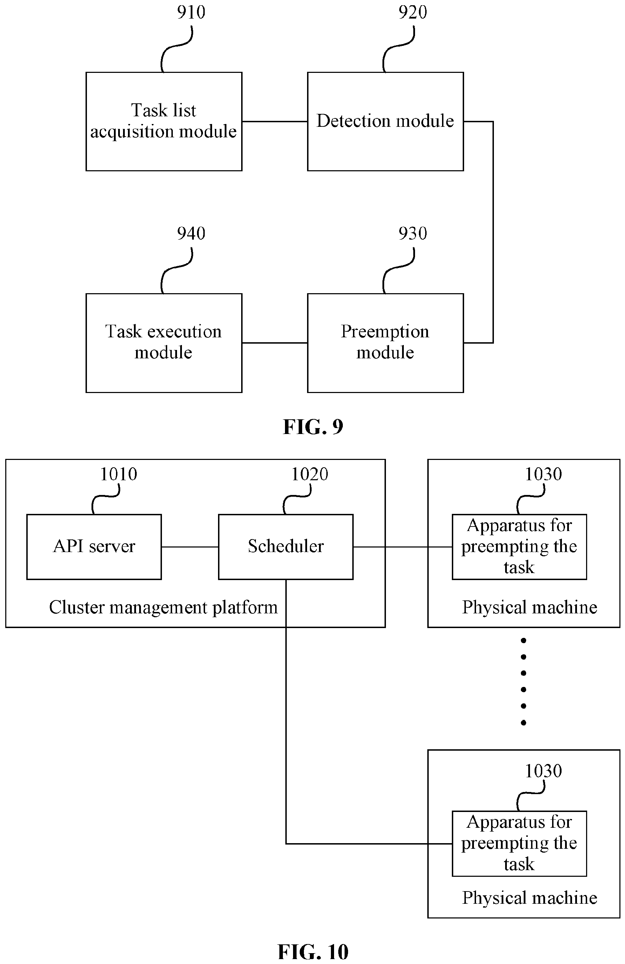

FIG. 9 is a structural block diagram of an apparatus for preempting a task provided by an embodiment of the present application. As shown in FIG. 9, the apparatus for preempting the task includes a task list acquisition module 910, a detection module 920, a preemption module 930 and a task execution module 940.

The task list acquisition module 910 is configured to acquire a task list running on a physical node in a case of processing a target task to be run.

The detection module 920 is configured to detect whether remaining resources on the physical node satisfy resources required for running the target task.

The preemption module 930 is configured to: when the remaining resources on the physical node do not satisfy the resources required for running the target task, move, by the physical node, a task having a priority lower than the target task in the task list sequentially into a queue to be removed in a priority order from low to high (namely move the tasks sequentially out of the task list in the priority order from low to high) until the remaining resources obtained after the physical node executes the task in the task list satisfy the resources required for running the target task; and adopt the target task to preempt the task in the queue to be removed.

The task execution module 940 is configured to call an execution environment for the physical node to run the target task.

In an embodiment, the preemption module may be further configured to acquire resource usage information at each set time interval.

If it is determined that the resource usage information reaches a preset limitation condition, a task in the task list is moved into the queue to be removed in the priority order from low to high until the resource usage information, determined after the physical node executes the task in the task list, does not reach the preset limitation condition, and the task in the queue to be removed is stopped.

In an embodiment, the apparatus is applied to a Kubernetes system, the target task is a target pod, the task list is a pod list, and a task in the task list is a pod running on the physical node.

The apparatus described above executes the method for preempting the task provided by any embodiment of the present application, and has function modules and beneficial effects corresponding to the method for preempting the task.

FIG. 10 is a schematic structural diagram of a system for preempting a task provided by an embodiment of the present application. As shown in FIG. 10, the system for preempting the task includes the API server 1010 provided in the above-described embodiments, the scheduler 1020 provided in the above-described embodiments, and the apparatus for preempting the task 1030 provided in the above-described embodiments.

In an embodiment, the API server 1010 and the scheduler 1020 are assemblies of the cluster management platform, respectively, and the cluster management platform is integrated on a computer device used by a user. The apparatus for preempting the task 1030 is integrated on a physical machine of a physical node.

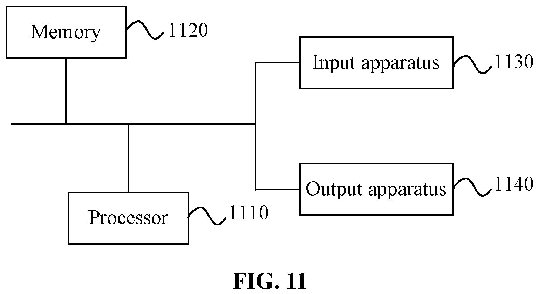

FIG. 11 is a schematic structural diagram of a device provided by an embodiment of the present application. As shown in FIG. 11, the device includes one or more processors 1110 and a memory 1120. In FIG. 11, one processor 1110 is taken as an example.

The device may further include an input apparatus 1130 and an output apparatus 1140.

The processor 1110, the memory 1120, the input apparatus 1130 and the output apparatus 1140 in the device may be connected through a bus or otherwise, for example connected through the bus in FIG. 11.

The memory 1120, as a non-transitory computer-readable storage medium, may be used for storing software programs, computer-executable programs, and modules, such as program instructions/modules (e.g., the request acquisition module 710 and the task creation module 720 shown in FIG. 7) corresponding to the method for creating the task in the embodiments of the present application, or program instructions/modules (e.g., the mapping table forming module 810, the screening module 820 and the binding module 830 shown in FIG. 8) corresponding to the method for scheduling the task in the embodiments of the present application, or program instructions/modules corresponding to the method for preempting the task in the embodiments of the present application (e.g., the task list acquisition module 910, the detection module 920, the preemption module 930, and the task execution module 940 shown in FIG. 9). The processor 1110 executes various functional applications and data processing of a computer device by running software programs, instructions and modules stored in the memory 1120, that is, the method for creating the task in the above-described method embodiments is realized: the API server acquires the creation request of the task; when the API server detects that the quota of the tenant to which the task belongs contains the resource matching with the priority of the task, and the matching resource satisfies the creation condition of the task, the task is created according to the creation request.

Alternatively, the processor 1110 implements the method for scheduling the task in the above-described method embodiments by running software programs, instructions and modules stored in the memory 1120. The method for scheduling the task includes: the scheduler acquires the current task to be scheduled from the task scheduling queue, and acquires the task having the priority greater than or equal to the priority of the current task on each physical node to form the node-task mapping table; the scheduler determines the target physical node best satisfying the preset screening condition according to the mapping table and the preset screening condition; and the scheduler binds the current task with the target physical node, and sends the binding information to the API server.

Alternatively, the processor 1110 implements the method for preempting the task in the above-described method embodiment by running software programs, instructions and modules stored in the memory 1120. The method for preempting the task includes: when the physical node processes the target task to be run, the task list running on the physical node is acquired; the physical node detects whether remaining resources of the physical node satisfy the resources required for running the target task, if the physical node detects that the remaining resources of the physical node do not satisfy the resources required for running the target task, the physical node moves the task having a priority lower than the priority of the target task in the task list sequentially into the queue to be removed in the priority order from low to high until the remaining resources obtained after the physical node executes the task in the task list satisfy the resources required for running the target task, and the target task is adopted to preempt the task in the queue to be removed; and the physical node calls the execution environment to run the target task.

The memory 1120 may include a program storage region and a data storage region. The program storage region may store an operating system, and an application program required for at least one function. The data storage region may store data created according to the usage of the computer device, etc. Moreover, the memory 1120 may include a high-speed random access memory, and may further include a non-transitory memory, such as at least one magnetic disk storage device, a flash memory device, or other non-transitory solid-state storage device. In some embodiments, the memory 1120 includes memories remotely disposed with respect to the processor 1110, and these remote memories may be connected to a terminal device through a network. Examples of the above-described network include, but are not limited to, Internet, enterprise intranets, local area networks, mobile communication networks, and combinations thereof.

The input apparatus 1130 may be used for receiving input numeric or character information, and generating key signal inputs related to user settings and function controls of the computer device. The output apparatus 1140 may include a display device such as a display screen.

An embodiment of the present application provides a computer-readable storage medium on which a computer program is stored. The program, when executed by a processor, implements the method for creating the task provided in the embodiments of the present application. The method for creating the task includes: the creation request of the task is acquired; and when it is detected that the quota of the tenant to which the task belongs contains the resource matching with the priority of the task, and the matching resource satisfies the creation condition of the task, the task is created according to the creation request.

Alternatively, the program, when executed by the processor, implements the method for scheduling the task in the above-described method embodiment. The method for scheduling the task includes: the scheduler acquires the current task to be scheduled from the task scheduling queue, and acquires the task having the priority greater than or equal to the priority of the current task on each physical node to form the node-task mapping table; the scheduler determines the target physical node best satisfying the preset screening condition according to the mapping table and the preset screening condition; and the scheduler binds the current task with the target physical node, and sends the binding information to the API server..

Alternatively, the program, when executed by the processor, implements the method for preempting the task in the above-described method embodiment. The method for preempting the task includes: when the physical node processes the target task to be run, the task list of tasks running on the physical node is acquired; the physical node detects whether remaining resources of the physical node satisfy the resources required for running the target task, if the physical node detects that the remaining resources of the physical node do not satisfy the resources required for running the target task, the physical node moves the task having a priority lower than the priority of the target task in the task list sequentially into the queue to be removed in the priority order from low to high until the remaining resources obtained after the physical node executes the task in the task list satisfy the resources required for running the target task, and the target task is adopted to preempt the task in the queue to be removed; and the physical node calls the execution environment to run the target task.

Any combination of one or more computer-readable media may be employed. A computer-readable medium may be a computer readable signal medium or a computer readable storage medium. The computer-readable storage medium may be, for example, but not limited to, an electronic, magnetic, optical, electromagnetic, infrared, or semiconductor system, apparatus, or device, or any combination thereof. More specific examples of the computer-readable storage media (non-exhaustive list) include electrical connections with one or more wires, a portable computer magnetic disk, a hard disk, a random access memory (RAM), a read only memory (ROM), an erasable programmable read only memory (EPROM or a flash), an optical fiber, a portable compact disc read-only memory (CD-ROM), an optical storage device, a magnetic storage device, or any suitable combination thereof. In this disclosure, the computer-readable storage medium may be any tangible medium that contains or stores a program, which may be used by or in combination with an instruction execution system, apparatus, or device.

A computer-readable signal medium may include a data signal propagated in baseband or as a part of a carrier wave, and a computer-readable program code is carried therein. This propagated data signal may take a variety of forms, including, but not limited to, an electromagnetic signal, an optical signal, or any suitable combination of the foregoing. The computer-readable signal medium may also be any computer-readable medium other than the computer-readable storage medium that may send, propagate, or transport a program for use by or in connection with an instruction execution system, apparatus, or device.

The program code contained on the computer-readable medium may be transmitted by any suitable medium, including, but not limited to, wirelesses, electrical wires, optical cables, RFs, etc., or any suitable combination of the foregoing.

A computer program code for performing the operations of the present application may be written in one or more programming languages or combinations thereof, the above-described programming languages include an object-oriented programming language-such as Java, Smalltalk, C++, and further include a conventional procedural programming language-such as a "C" language or similar programming language. The program code may be executed in following manners: executed entirely on a user's computer, executed partly on the user's computer, executed as an independent software package, executed partly on the user's computer and partly on a remote computer, or executed entirely on the remote computer or a server. In a case where the remote computer is involved, the remote computer may be connected to the user's computer through any kind of network, including a local area network (LAN) or a wide area network (WAN), or may be connected to an external computer (for example, connected to the external computer through an internet provided by an internet service provider).

## Claims

1. A resource sharing use method based on preemptive scheduling, the method applicable to a system comprising a cluster management platform and multiple physical nodes, wherein the cluster management platform is suitable for managing the multiple physical nodes, and the cluster management platform comprises a scheduler (1020) and an application programming interface, API, server (1010), wherein the method comprises:
acquiring (S610, S110), by the API server (1010), a creation request of a task;
in a case where the API server (1010) detects that a quota of a tenant to which the task belongs contains a resource required for running the task having a priority, and the required resource satisfies a creation condition of the task, creating (S620, S120), by the API server (1010), the task according to the creation request;
acquiring (S630), by the scheduler (1020), the task created by the API server (1010) to form a task scheduling queue;
acquiring (S640, S210), by the scheduler (1020), the task from the task scheduling queue for scheduling, acquiring, by the scheduler (1020), one or more tasks, having a priority greater than or equal to the priority of the task, on each of the multiple physical nodes, and acquiring, by the scheduler (1020), a corresponding relationship between each of the multiple physical nodes and the one or more tasks, having the priority greater than or equal to the priority of the task, on each of the multiple physical nodes to form a node-task mapping table of the multiple physical nodes;
determining (S650, S220), by the scheduler (1020), a target physical node satisfying a preset screening condition for performing the task according to the preset screening condition and the node-task mapping table comprising physical nodes on which the priority of the one or more tasks are greater than or equal to the priority of the task, wherein the preset screening condition comprises: a matching condition between a port required by performing the task and a physical node having the port among the multiple physical nodes, and determining whether remaining resources on the physical node having the port among the multiple physical nodes satisfy resources required for running the task;
binding (S660, S230), by the scheduler (1020), the task with the target physical node, and sending, by the scheduler (1020), binding information to the API server (1010);
monitoring (S670), by the target physical node, the binding information between the task and the target physical node in the API server (1010), and acquiring (S670), by the target physical node, the task based on the monitored binding information to form a task queue;
in a case where the target physical node processes the task in the task queue, acquiring (S680, S410), by the target physical node, a task list of tasks running on the target physical node;
detecting (S690, S420), by the target physical node, whether remaining resources obtained after the target physical node executes the tasks in the task list satisfy resources required for running the task;
in a case where the resources required for running the task are satisfied, running (S692, S440), by the target physical node, the task; and
in a case where the resources required for running the task are not satisfied, sequentially moving (S691, S430), by the target physical node, at least one task having a priority lower than the task in the task list into a queue to be removed in a priority order from low to high until the remaining resources of the target physical node satisfy the resources required for running the task, adopting (S691, S430) the task to preempt the at least one task in the queue to be removed, and running (S692, S440), by the target physical node, the task.

2. The method of claim 1, wherein acquiring (S610, S110), by the API server (1010), the creation request of the task comprises: acquiring, by the API server (1010), a creation request of a pod, wherein the pod refers to a process running in the cluster; and
wherein in a case where the API server (1010) detects that the quota of the tenant to which the task belongs contains the resource required for running the task having the priority, and the required resource satisfies the creation condition of the task, creating (S620, S120), by the API server (1010), the task according to the creation request comprises:
in a case where the API server (1010) detects that a quota of a namespace to which the pod belongs contains a quota value of a resource required for running the pod having a priority, and the quota value satisfies a creation condition of the pod, creating the pod according to the creation request of the pod.

3. The method of claim 1, further comprising:
acquiring, by the target physical node, resource usage information every set time interval; and
in a case where the physical node determines that the resource usage information reaches a preset limitation condition, sequentially moving at least one task in the task list into the queue to be removed in the priority order from low to high until the resource usage information, determined in a case where the physical node executes tasks in the task list, does not reach the preset limitation condition, and stopping the at least one task in the queue to be removed.

4. The method of claim 1 or 3, wherein the task is a target pod, the task list is a pod list, and tasks in the task list are pods running on the target physical node, wherein the pods refer to processes running in the cluster.

5. A resource sharing use system based on preemptive scheduling comprising a cluster management platform and multiple physical nodes wherein the cluster management platform is suitable for managing the multiple physical nodes, the cluster management platform comprising an application programming interface, API, server (1010) and a scheduler (1020), and each of the multiple physical nodes comprising an apparatus (1030) for preempting a task; wherein
the API server (1010) comprises:
a request acquisition module (710), which is configured to acquire a creation request of a task; and
a task creation module (720), which is configured to create the task according to the creation request, in a case of detecting that a quota of a tenant to which the task belongs contains a resource required for running the task having a priority, and the required resource satisfies a creation condition of the task;
the scheduler (1020) comprises:
a mapping table forming module (810), which is configured to: acquire a task from the task scheduling queue for scheduling, acquire one or more tasks, having a priority greater than or equal to the priority of the task, on each of the multiple physical nodes, and acquire a corresponding relationship between each of the multiple physical nodes and the one or more tasks, having the priority greater than or equal to the priority of the task, on each of the multiple physical nodes to form a node-task mapping table of the multiple physical nodes;
a screening module (820), which is configured to determine a target physical node satisfying a preset screening condition for performing the task according to the preset screening condition and the node-task mapping table comprising physical nodes on which the priority of the one or more tasks are greater than or equal to the priority of the task, wherein the preset screening condition comprises: a matching condition between a port required by performing the task and a physical node having the port among the multiple physical nodes, and determining whether remaining resources on the physical node having the port among the multiple physical nodes satisfy resources required for running the task; and
a binding module (830), which is configured to: bind the task with the target physical node, and send binding information to the API server; and
the apparatus (1030) for preempting the task comprises:
a task list acquisition module (910), which is configured to acquire a task list of tasks running on the target physical node in a case of processing the task;
a detection module (920), which is configured to detect whether remaining resources on the target physical node satisfy resources required for running the task;
a preemption module (930), which is configured to: in a case where the detection module detects that the remaining resources on the target physical node do not satisfy the resources required for running the task, sequentially move at least one task in the task list into a queue to be removed in a priority order from low to high until the remaining resources, obtained in a case where the target physical node executes remaining tasks in the task list, satisfy the resources required for running the task, and a priority of each task in the queue to be removed is less than a priority of the task, and adopt the task to preempt the at least one task in the queue to be removed; and
a task execution module (940), which is configured to run the task in a case where the resources required for running the task are satisfied, and run the task after adopting the task to preempt the at least one task in the queue to be removed.

6. A computer-readable storage medium, storing a computer program, wherein the program, when executed by a first processor (1110) in an application programming interface, API, server (1010), causes the first processor (1110) to perform the steps of:
acquiring a creation request of a task; and
in a case where the API server (1010) detects that a quota of a tenant to which the task belongs contains a resource required for running the task having a priority, and the required resource satisfies a creation condition of the task, creating the task according to the creation request; and
wherein the program, when executed by a second processor (1110) in a scheduler (1020), causes the second processor (1110) to perform the steps of:
acquiring the task created by the API server (1010) to form a task scheduling queue;
acquiring a task from the task scheduling queue for scheduling, acquiring one or more tasks, having a priority greater than or equal to the priority of the task, on each of multiple physical nodes, and acquiring a corresponding relationship between each of the multiple physical nodes and the one or more tasks, having the priority greater than or equal to the priority of the task, on each of the multiple physical nodes to form a node-task mapping table of the multiple physical nodes;
determining a target physical node satisfying a preset screening condition for performing the task according to the preset screening condition and the node-task mapping table comprising physical nodes on which the priority of the one or more tasks are greater than or equal to the priority of the task, wherein the preset screening condition comprises: a matching condition between a port required by performing the task and a physical node having the port among the multiple physical nodes, and determining whether remaining resources on the physical node having the port among the multiple physical nodes satisfy resources required for running the task; and
binding the task with the target physical node, and sending binding information to the API server (1010); and
wherein the program, when executed by a third processor (1110) in the target physical node among the multiple physical nodes, causes the third processor (1110) to perform the steps of:
monitoring the binding information between the task and the target physical node in the API server (1010), and acquiring the task based on the monitored binding information to form a task queue;
in a case where the target physical node processes the task in the task queue, acquiring a task list of tasks running on the target physical node;
detecting whether remaining resources obtained after the target physical node executes the tasks in the task list satisfy resources required for running the task;
in a case where the resources required for running the task are satisfied, running the task; and
in a case where the resources required for running the task are not satisfied, sequentially moving at least one task having a priority lower than the task in the task list into a queue to be removed in a priority order from low to high until the remaining resources of the target physical node satisfy the resources required for running the task, adopting the task to preempt the at least one task in the queue to be removed, and running the task;
wherein the API server (1010) and the scheduler (1020) are assemblies of a cluster management platform, wherein the cluster management platform is suitable for managing the multiple physical nodes.

## Patentansprüche

1. Verfahren zur gemeinsamen Nutzung von Ressourcen basierend auf präemptiver Planung, wobei das Verfahren auf ein System anwendbar ist, das eine Cluster-Verwaltungsplattform und mehrere physische Knoten umfasst, wobei die Cluster-Verwaltungsplattform zum Verwalten der mehreren physischen Knoten geeignet ist und die Cluster-Verwaltungsplattform einen Scheduler (1020) und einen Anwendungsprogrammierschnittstellen-, API-Server (1010) umfasst, wobei das Verfahren Folgendes umfasst:
Erfassen (S610, S110), durch den API-Server (1010), einer Erstellungsanforderung einer Aufgabe;
in einem Fall, in dem der API-Server (1010) erkennt, dass ein Kontingent eines Mandanten, zu dem die Aufgabe gehört, eine Ressource enthält, die zum Ausführen der Aufgabe mit Priorität erforderlich ist und die erforderliche Ressource eine Erstellungsbedingung der Aufgabe erfüllt, Erstellen (S620, S120), durch den API-Server (1010), der Aufgabe gemäß der Erstellungsanforderung;
Erfassen (S630), durch den Scheduler (1020), der Aufgabe, die durch den API-Server (1010) erstellt wird, um eine Aufgabenplanungswarteschlange zu bilden;
Erfassen (S640, S210), durch den Scheduler (1020), der Aufgabe aus der Aufgabenplanungswarteschlange zum Planen, Erfassen, durch den Scheduler (1020), von einer oder mehreren Aufgaben mit einer Priorität, die größer als die oder gleich der Priorität der Aufgabe ist, auf jedem der mehreren physischen Knoten, und Erfassen, durch den Scheduler (1020), einer entsprechenden Beziehung zwischen jedem der mehreren physischen Knoten und der einen oder den mehreren Aufgaben mit der Priorität, die größer als die oder gleich der Priorität der Aufgabe ist, auf jedem der mehreren physischen Knoten, um eine Knoten-Aufgaben-Zuordnungstabelle der mehreren physischen Knoten zu bilden;
Bestimmen (S650, S220), durch den Scheduler (1020), eines physischen Zielknotens, der eine voreingestellte Screening-Bedingung zum Durchführen der Aufgabe erfüllt, gemäß der voreingestellten Screening-Bedingung und der Knoten-Aufgaben-Zuordnungstabelle, die physische Knoten umfasst, auf denen die Priorität der einen oder mehreren Aufgaben größer als die oder gleich der Priorität der Aufgabe ist, wobei die voreingestellte Screening-Bedingung Folgendes umfasst: eine Übereinstimmungsbedingung zwischen einem Port, der zum Durchführen der Aufgabe erforderlich ist, und einem physischen Knoten mit dem Port unter den mehreren physischen Knoten, und Bestimmen, ob übrige Ressourcen auf dem physischen Knoten mit dem Port unter den mehreren physischen Knoten Ressourcen erfüllen, die zum Ausführen der Aufgabe erforderlich sind;
Binden (S660, S230), durch den Scheduler (1020), der Aufgabe mit dem physischen Zielknoten, und Senden, durch den Scheduler (1020), von Bindungsinformationen an den API-Server (1010);
Überwachen (S670), durch den physischen Zielknoten, der Bindungsinformationen zwischen der Aufgabe und dem physischen Zielknoten in dem API-Server (1010), und Erfassen (S670), durch den physischen Zielknoten, der Aufgabe basierend auf den überwachten Bindungsinformationen, um eine Aufgabenwarteschlange zu bilden;
in einem Fall, in dem der physische Zielknoten die Aufgabe in der Aufgabenwarteschlange verarbeitet, Erfassen (S680, S410), durch den physischen Zielknoten, einer Aufgabenliste von Aufgaben, die auf dem physischen Zielknoten ausgeführt werden;
Erkennen (S690, S420), durch den physischen Zielknoten, ob übrige Ressourcen, die erhalten werden, nachdem der physische Zielknoten die Aufgaben in der Aufgabenliste umsetzt, Ressourcen erfüllen, die zum Ausführen der Aufgabe erforderlich sind;
in einem Fall, in dem die Ressourcen, die zum Ausführen der Aufgabe erforderlich sind, erfüllt sind, Ausführen (S692, S440), durch den physischen Zielknoten, der Aufgabe; und
in einem Fall, in dem die Ressourcen, die zum Ausführen der Aufgabe erforderlich sind, nicht erfüllt sind, sequentielles Bewegen (S691, S430), durch den physischen Zielknoten, von zumindest einer Aufgabe mit einer niedrigeren Priorität als die Aufgabe in der Aufgabenliste in eine Warteschlange, die zu entfernen ist, in einer Prioritätsreihenfolge von niedrig nach hoch, bis die übrigen Ressourcen des physischen Zielknotens die Ressourcen erfüllen, die zum Ausführen der Aufgabe erforderlich sind, Annehmen (S691, S430) der Aufgabe, um die zumindest eine Aufgabe in der Warteschlange, die zu entfernen ist, zu präemptieren, und Ausführen (S692, S440) der Aufgabe durch den physischen Zielknoten.

2. Verfahren nach Anspruch 1, wobei das Erfassen (S610, S 110), durch den API-Server (1010), der Erstellungsanforderung der Aufgabe Folgendes umfasst: Erfassen, durch den API-Server (1010), einer Erstellungsanforderung eines Pods, wobei sich der Pod auf einen Prozess bezieht, der in dem Cluster ausgeführt wird; und
wobei in einem Fall, in dem der API-Server (1010) erkennt, dass das Kontingent des Mandanten, zu dem die Aufgabe gehört, die Aufgabe beinhaltet, die zum Ausführen der Aufgabe mit der Priorität erforderlich ist und die erforderliche Ressource die Erstellungsbedingung der Aufgabe erfüllt, das Erstellen (S620, S120), durch den API-Server (1010), der Aufgabe gemäß der Erstellungsanforderung Folgendes umfasst:
in einem Fall, in dem der API-Server (1010) erkennt, dass ein Kontingent eines Namespaces, zu dem der Pod gehört, einen Kontingentwert einer Ressource enthält, die zum Ausführen des Pods mit einer Priorität erforderlich ist, und der Kontingentwert eine Erstellungsbedingung des Pods erfüllt, Erstellen des Pods gemäß der Erstellungsanforderung des Pods.

3. Verfahren nach Anspruch 1, ferner umfassend:
Erfassen, durch den physischen Zielknoten, von Ressourcennutzungsinformationen in jedem festgelegten Zeitintervall; und
in einem Fall, in dem der physische Knoten bestimmt, dass die Ressourcennutzungsinformationen einen voreingestellten Begrenzungszustand erreichen, sequentielles Bewegen von zumindest einer Aufgabe in der Aufgabenliste in die Warteschlange, um in der Prioritätsreihenfolge von niedrig nach hoch entfernt zu werden, bis die Ressourcennutzungsinformationen, die in einem Fall bestimmt werden, in dem der physische Knoten Aufgaben in der Aufgabenliste umsetzt, die voreingestellte Begrenzungsbedingung nicht erreichen, und Stoppen der zumindest einen Aufgabe in der Warteschlange, die zu entfernen ist.

4. Verfahren nach Anspruch 1 oder 3, wobei die Aufgabe ein Ziel-Pod ist, die Aufgabenliste eine Pod-Liste ist und Aufgaben in der Aufgabenliste Pods sind, die auf dem physischen Zielknoten ausgeführt werden, wobei sich die Pods auf Prozesse beziehen, die in dem Cluster ausgeführt werden.

5. System zur gemeinsamen Nutzung von Ressourcen basierend auf präemptiver Planung, das eine Cluster-Management-Plattform und mehrere physische Knoten umfasst, wobei die Cluster-Management-Plattform für Verwaltung der mehreren physischen Knoten geeignet ist, die Cluster-Management-Plattform einen Anwendungsprogrammierschnittstellen-, API-Server (1010) und einen Scheduler (1020) umfasst und jeder der mehreren physischen Knoten eine Vorrichtung (1030) zum Präemptieren einer Aufgabe umfasst; wobei
der API-Server (1010) Folgendes umfasst:
ein Anforderungserfassungsmodul (710), das konfiguriert ist, um eine Erstellungsanforderung für eine Aufgabe zu erfassen, und
ein Aufgabenerstellungsmodul (720), das konfiguriert ist, um die Aufgabe gemäß der Erstellungsanforderung zu erstellen, in einem Fall, in dem erkannt wird, dass ein Kontingent eines Mandanten, zu dem die Aufgabe gehört, eine Ressource enthält, die zum Ausführen der Aufgabe mit einer Priorität erforderlich ist und die erforderliche Ressource eine Erstellungsbedingung der Aufgabe erfüllt;
der Scheduler (1020) Folgendes umfasst:
ein Zuordnungstabellenbildungsmodul (810), das zu Folgendem konfiguriert ist: Erfassen einer Aufgabe aus der Aufgabenplanungswarteschlange zum Planen, Erfassen von einer oder mehreren Aufgaben mit einer Priorität, die größer als die oder gleich der Priorität der Aufgabe ist, auf jedem der mehreren physischen Knoten, und Erfassen einer entsprechenden Beziehung zwischen jedem der mehreren physischen Knoten und der einen oder den mehreren Aufgaben mit einer Priorität, die größer als die oder gleich der Priorität der Aufgabe ist, auf jedem der mehreren physischen Knoten, um eine Knoten-Aufgaben-Zuordnungstabelle der mehreren physischen Knoten zu bilden;
ein Screening-Modul (820), das konfiguriert ist, um einen physischen Zielknoten zu bestimmen, der eine voreingestellte Screening-Bedingung zum Durchführen der Aufgabe erfüllt, gemäß der voreingestellten Screening-Bedingung und der Knoten-Aufgaben-Zuordnungstabelle, die physische Knoten umfasst, auf denen die Priorität der einen oder mehreren Aufgaben größer als die oder gleich der Priorität der Aufgabe ist, wobei die voreingestellte Screening-Bedingung Folgendes umfasst: eine Übereinstimmungsbedingung zwischen einem Port, der zum Durchführen der Aufgabe erforderlich ist und einem physischen Knoten mit dem Port unter den mehreren physischen Knoten, und Bestimmen, ob übrige Ressourcen auf dem physischen Knoten mit dem Port unter den mehreren physischen Knoten Ressourcen erfüllen, die zum Ausführen der Aufgabe erforderlich sind; und
ein Bindungsmodul (830), das zu Folgendem konfiguriert ist: Binden der Aufgabe mit dem physischen Zielknoten, und Senden von Bindungsinformationen an den API-Server; und
die Vorrichtung (1030) zum Präemptieren der Aufgabe Folgendes umfasst:
ein Aufgabenlistenerfassungsmodul (910), das konfiguriert ist, um in einem Fall der Verarbeitung der Aufgabe eine Aufgabenliste von Aufgaben zu erfassen, die auf dem physischen Zielknoten ausgeführt werden;
ein Erkennungsmodul (920), das konfiguriert ist, um zu erkennen, ob übrige Ressourcen auf dem physischen Zielknoten Ressourcen erfüllen, die zum Ausführen der Aufgabe erforderlich sind;
ein Präemptionsmodul (930), das zu Folgendem konfiguriert ist: in einem Fall, in dem das Erkennungsmodul erkennt, dass die übrigen Ressourcen auf dem physischen Zielknoten die Ressourcen, die zum Ausführen der Aufgabe erforderlich sind, nicht erfüllen, sequentielles Bewegen von zumindest einer Aufgabe in der Aufgabenliste in eine Warteschlange, die zu entfernen ist, in einer Prioritätsreihenfolge von niedrig nach hoch, bis die übrigen Ressourcen, die in einem Fall erhalten werden, in dem der physische Zielknoten übrige Aufgaben in der Aufgabenliste umsetzt, die Ressourcen erfüllt, die zum Ausführen der Aufgabe erforderlich sind und eine Priorität jeder Aufgabe in der Warteschlange, die zu entfernen ist, niedriger als eine Priorität der Aufgabe ist, und Übernehmen der Aufgabe, um die zumindest eine Aufgabe in der Warteschlange, die zu entfernen ist, zu präemptieren; und
ein Aufgabenumsetzungsmodul (940), das konfiguriert ist, um die Aufgabe auszuführen, in einem Fall, in dem die Ressourcen, die zum Ausführen der Aufgabe erforderlich sind, erfüllt sind, und die Aufgabe nach dem Übernehmen der Aufgabe auszuführen, um die zumindest eine Aufgabe in der Warteschlange, die zu entfernen ist, zu präemptieren.

6. Computerlesbares Speichermedium, das ein Computerprogramm speichert, wobei das Programm, wenn es durch einen ersten Prozessor (1110) in einem Anwendungsprogrammierschnittstellen-, API-Server (1010) umgesetzt wird, den ersten Prozessor (1110) veranlasst, die folgenden Schritte durchzuführen:
Erfassen einer Erstellungsanforderung einer Aufgabe; und
in einem Fall, in dem der API-Server (1010) erkennt, dass ein Kontingent eines Mandanten, zu dem die Aufgabe gehört, eine Ressource enthält, die zum Ausführen der Aufgabe mit einer Priorität erforderlich ist, und die erforderliche Ressource eine Erstellungsbedingung der Aufgabe erfüllt, Erstellen der Aufgabe gemäß der Erstellungsanforderung; und
wobei das Programm, wenn es durch einen zweiten Prozessor (1110) in einem Scheduler (1020) umgesetzt wird, bewirkt, dass der zweite Prozessor (1110) die folgenden Schritte durchführt:
Erfassen der Aufgabe, die durch den API-Server (1010) erstellt wird, um eine Aufgabenplanungswarteschlange zu bilden;
Erfassen einer Aufgabe aus der Aufgabenplanungswarteschlange zum Planen, Erfassen von einer oder mehreren Aufgaben mit einer Priorität, die größer als die oder gleich der Priorität der Aufgabe ist, auf jedem der mehreren physischen Knoten, und Erfassen einer entsprechenden Beziehung zwischen jedem der mehreren physischen Knoten und der einen oder den mehreren Aufgaben mit der Priorität, die größer als die oder gleich der Priorität der Aufgabe ist, auf jedem der mehreren physischen Knoten, um eine Knoten-Aufgaben-Zuordnungstabelle der mehreren physischen Knoten zu bilden;
Bestimmen eines physischen Zielknotens, der eine voreingestellte Screening-Bedingung zum Durchführen der Aufgabe erfüllt, gemäß der voreingestellten Screening-Bedingung und der Knoten-Aufgaben-Zuordnungstabelle, die physische Knoten umfasst, auf denen die Priorität der einen oder mehreren Aufgaben größer als die oder gleich der Priorität der Aufgabe ist, wobei die voreingestellte Screening-Bedingung Folgendes umfasst: eine Übereinstimmungsbedingung zwischen einem Port, der zum Durchführen der Aufgabe erforderlich ist und einem physischen Knoten mit dem Port unter den mehreren physischen Knoten, und Bestimmen, ob übrige Ressourcen auf dem physischen Knoten mit dem Port unter den mehreren physischen Knoten die Ressourcen erfüllen, die zum Ausführen der Aufgabe erforderlich sind; und
Binden der Aufgabe mit dem physischen Zielknoten und Senden von Bindungsinformationen an den API-Server (1010); und
wobei das Programm, wenn es durch einen dritten Prozessor (1110) in dem physischen Zielknoten unter den mehreren physischen Knoten umgesetzt wird, den dritten Prozessor (1110) veranlasst, die folgenden Schritte durchzuführen:
Überwachen der Bindungsinformationen zwischen der Aufgabe und dem physischen Zielknoten in dem API-Server (1010), und Erfassen der Aufgabe basierend auf den überwachten Bindungsinformationen, um eine Aufgabenwarteschlange zu bilden;
in einem Fall, in dem der physische Zielknoten die Aufgabe in der Aufgabenwarteschlange verarbeitet, Erfassen einer Aufgabenliste von Aufgaben, die auf dem physischen Zielknoten ausgeführt werden;
Erkennen, ob übrige Ressourcen, die erhalten werden, nachdem der physische Zielknoten die Aufgaben in der Aufgabenliste umsetzt, Ressourcen erfüllen, die zum Ausführen der Aufgabe erforderlich sind;
in einem Fall, in dem die Ressourcen, die zum Ausführen der Aufgabe erforderlich sind, erfüllt sind, Ausführen der Aufgabe; und
in einem Fall, in dem die Ressourcen, die zum Ausführen der Aufgabe erforderlich sind, nicht erfüllt sind, sequentielles Bewegen von zumindest einer Aufgabe mit einer niedrigeren Priorität als die Aufgabe in der Aufgabenliste in eine Warteschlange, die zu entfernen ist, in einer Prioritätsreihenfolge von niedrig nach hoch, bis die übrigen Ressourcen des physischen Zielknotens die Ressourcen erfüllen, die zum Ausführen der Aufgabe erforderlich sind, Annehmen der Aufgabe, um die zumindest eine Aufgabe in der Warteschlange, die zu entfernen ist, zu präemptieren, und Ausführen der Aufgabe;
wobei der API-Server (1010) und der Scheduler (1020) Baugruppen einer Cluster-Management-Plattform sind, wobei die Cluster-Management-Plattform zum Verwalten der mehreren physischen Knoten geeignet ist.

## Revendications

1. Procédé d'utilisation de partage de ressources à base d'ordonnancement préemptif, le procédé étant applicable à un système comprenant une plateforme de gestion de cluster et de multiples noeuds physiques, dans lequel la plateforme de gestion de cluster est appropriée pour gérer les multiples noeuds physiques, et la plateforme de gestion de cluster comprend un ordonnanceur (1020) et un serveur d'interface de programmation d'application, API, (1010), dans lequel le procédé comprend :
l'acquisition (S610, 5110), par le serveur API (1010), d'une requête de création d'une tâche ;
dans un cas où le serveur API (1010) détecte qu'un quota d'un locataire auquel appartient la tâche contient une ressource requise pour exécuter la tâche comportant une priorité, et que la ressource requise satisfait une condition de création de la tâche, la création (S620, S120), par le serveur API (1010), de la tâche conformément à la requête de création ;
l'acquisition (S630), par l'ordonnanceur (1020), de la tâche créée par le serveur API (1010) pour former une file d'attente d'ordonnancement de tâches ;
l'acquisition (S640, S210), par l'ordonnanceur (1020), de la tâche à partir de la file d'attente d'ordonnancement de tâches pour ordonnancement, l'acquisition, par l'ordonnanceur (1020), d'une ou plusieurs tâches, comportant une priorité supérieure ou égale à la priorité de la tâche, sur chacun des multiples noeuds physiques, et l'acquisition, par l'ordonnanceur (1020), d'une relation correspondante entre chacun des multiples noeuds physiques et l'une ou plusieurs tâches, comportant la priorité supérieure ou égale à la priorité de la tâche, sur chacun des multiples noeuds physiques, pour former une table de mappage noeud-tâche des multiples noeuds physiques ;
la détermination (S650, S220), par l'ordonnanceur (1020), d'un noeud physique cible satisfaisant une condition de filtrage prédéfinie pour réaliser la tâche conformément à la condition de filtrage prédéfinie et la table de mappage noeud-tâche comprenant des noeuds physiques sur lesquels la priorité de l'une ou plusieurs tâches sont supérieures ou égales à la priorité de la tâche, dans lequel la condition de filtrage prédéfinie comprend : une condition de correspondance entre un port requis par la réalisation de la tâche et un noeud physique comportant le port parmi les multiples noeuds physiques, et la détermination si des ressources restantes sur le noeud physique comportant le port parmi les multiples noeuds physiques satisfont les ressources requises pour exécuter la tâche ;
la liaison (S660, S230), par l' ordonnanceur (1020), de la tâche avec le noeud physique cible, et l'envoi, par l'ordonnanceur (1020), des informations de liaison au serveur API (1010) ;
la surveillance (S670), par le noeud physique cible, des informations de liaison entre la tâche et le noeud physique cible dans le serveur API (1010), et l'acquisition (S670), par le noeud physique cible, de la tâche sur la base des informations de liaison surveillées pour former une file d'attente de tâches ;
dans un cas où le noeud physique cible traite la tâche dans la file d'attente de tâches, l'acquisition (S680, S410), par le noeud physique cible, d'une liste de tâches des tâches s'exécutant sur le noeud physique cible ;
la détection (S690, S420), par le noeud physique cible, si les ressources restantes obtenues après que le noeud physique cible a exécuté les tâches dans la liste de tâches satisfont les ressources requises pour exécuter la tâche ;
dans un cas où les ressources requises pour exécuter la tâche sont satisfaites, l'exécution (S692, S440) de la tâche par le noeud physique cible ; et
dans un cas où les ressources requises pour exécuter la tâche ne sont pas satisfaites, le déplacement séquentiel (S691, S430) par le noeud physique cible, d'au moins une tâche comportant une priorité inférieure à la tâche dans la liste des tâches dans une file d'attente à supprimer dans un ordre de priorité de la plus basse à la plus élevée, jusqu'à ce que les ressources restantes du noeud physique cible satisfassent les ressources requises pour exécuter la tâche, l'adoption (S691, S430) de la tâche pour préempter l'au moins une tâche dans la file d'attente à supprimer, et l'exécution (S692, S440), par le noeud physique cible, de la tâche.

2. Procédé selon la revendication 1, dans lequel l'acquisition (S610, S 110), par le serveur API (1010), de la requête de création de la tâche comprend : l'acquisition, par le serveur API (1010), d'une requête de création d'un pod, dans lequel le pod fait référence à un processus en cours d'exécution dans le cluster ; et
dans lequel, dans un cas où le serveur API (1010) détecte que le quota du locataire auquel appartient la tâche contient la ressource requise pour exécuter la tâche comportant la priorité, et que la ressource requise satisfait la condition de création de la tâche, la création (S620, S120), par le serveur API (1010), de la tâche conformément à la requête de création comprend :
dans un cas où le serveur API (1010) détecte qu'un quota d'un espace de noms auquel appartient le pod contient une valeur de quota d'une ressource requise pour exécuter le pod comportant une priorité, et que la valeur de quota satisfait une condition de création du pod, la création du pod conformément à la requête de création du pod.

3. Procédé selon la revendication 1, comprenant en outre :
l'acquisition, par le noeud physique cible, d'informations d'utilisation de ressources à chaque intervalle de temps défini ; et
dans un cas où le noeud physique détermine que les informations d'utilisation de ressources atteignent une condition de limitation prédéfinie, le déplacement séquentiel d'au moins une tâche dans la liste de tâches dans la file d'attente à supprimer dans un ordre de priorité de la plus basse à la plus élevée, jusqu'à ce que les informations d'utilisation des ressources, déterminées dans un cas où le noeud physique exécute des tâches dans la liste de tâches, n'atteint pas la condition de limitation prédéfinie, et l'arrêt de l'au moins une tâche dans la file d'attente à supprimer.

4. Procédé selon la revendication 1 ou 3, dans lequel la tâche est un pod cible, la liste de tâches est une liste de pods, et les tâches dans la liste de tâches sont des pods s'exécutant sur le noeud physique cible, dans lequel les pods font référence à des processus en cours d'exécution dans le cluster.

5. Système d'utilisation de partage de ressources à base d'ordonnancement préemptif comprenant une plateforme de gestion de cluster et de multiples noeuds physiques, dans lequel la plateforme de gestion de cluster est appropriée pour gérer les multiples noeuds physiques, la plateforme de gestion de cluster comprenant un serveur d'interface de programmation d'application, API, (1010) et un ordonnanceur (1020) et chacun des multiples noeuds physiques comprenant un appareil (1030) pour préempter une tâche ; dans lequel
le serveur API (1010) comprend :
un module d'acquisition de requête (710), qui est configuré pour acquérir une requête de création d'une tâche ; et
un module de création de tâche (720), qui est configuré pour créer la tâche conformément à la requête de création, dans un cas de détection qu'un quota d'un locataire auquel appartient la tâche contient une ressource requise pour exécuter la tâche comportant une priorité, et que la ressource requise satisfait une condition de création de la tâche ;
l'ordonnanceur (1020) comprend :
un module de formation de table de mappage (810), qui est configuré pour : acquérir une tâche à partir de la file d'attente d'ordonnancement de tâches pour ordonnancement, acquérir une ou plusieurs tâches, comportant une priorité supérieure ou égale à la priorité de la tâche, sur chacun des multiples noeuds physiques, et acquérir une relation correspondante entre chacun des multiples noeuds physiques et l'une ou plusieurs tâches, comportant la priorité supérieure ou égale à la priorité de la tâche, sur chacun des multiples noeuds physiques pour former une table de mappage noeud-tâche des multiples noeuds physiques ;
un module de filtrage (820), qui est configuré pour déterminer un noeud physique cible satisfaisant une condition de filtrage prédéfinie pour réaliser la tâche conformément à la condition de filtrage prédéfinie et la table de mappage noeud-tâche comprenant des noeuds physiques sur lesquels la priorité de l'une ou plusieurs tâches sont supérieures ou égales à la priorité de la tâche, dans lequel la condition de filtrage prédéfinie comprend : une condition de correspondance entre un port requis par la réalisation de la tâche et un noeud physique comportant le port parmi les multiples noeuds physiques, et la détermination si les ressources restantes sur le noeud physique comportant le port parmi les multiples noeuds physiques satisfont les ressources requises pour exécuter la tâche ; et
un module de liaison (830), qui est configuré pour : lier la tâche au noeud physique cible et envoyer des informations de liaison au serveur API ; et
l'appareil (1030) pour préempter la tâche comprend :
un module d'acquisition de liste de tâches (910), qui est configuré pour acquérir une liste de tâches des tâches s'exécutant sur le noeud physique cible dans un cas de traitement de la tâche ;
un module de détection (920), qui est configuré pour détecter si les ressources restantes sur le noeud physique cible satisfont les ressources requises pour exécuter la tâche ;
un module de préemption (930), qui est configuré pour : dans un cas où le module de détection détecte que les ressources restantes sur le noeud physique cible ne satisfont pas les ressources requises pour exécuter la tâche, déplacer séquentiellement au moins une tâche dans la liste de tâches dans une file d'attente à supprimer dans un ordre de priorité de la plus basse à la plus élevée, jusqu'à ce que les ressources restantes, obtenues dans un cas où le noeud physique cible exécute les tâches restantes dans la liste des tâches, satisfassent les ressources requises pour exécuter la tâche et qu'une priorité de chaque tâche dans la file d'attente à supprimer soit inférieure à une priorité de la tâche, et adopter la tâche pour préempter l'au moins une tâche dans la file d'attente à supprimer ; et
un module d'exécution de tâche (940), qui est configuré pour exécuter la tâche dans un cas où les ressources requises pour exécuter la tâche sont satisfaites, et exécuter la tâche après avoir adopté la tâche pour préempter l'au moins une tâche dans la file d'attente à supprimer.

6. Support de stockage lisible par ordinateur, stockant un programme informatique, dans lequel le programme, lorsqu'il est exécuté par un premier processeur (1110) dans un serveur d'interface de programmation d'application, API, (1010), amène le premier processeur (1110) à réaliser les étapes de :
acquisition d'une requête de création d'une tâche ; et
dans un cas où le serveur API (1010) détecte qu'un quota d'un locataire auquel appartient la tâche contient une ressource requise pour exécuter la tâche comportant une priorité, et que la ressource requise satisfait une condition de création de la tâche, création de la tâche conformément à la requête de création ; et
dans lequel le programme, lorsqu'il est exécuté par un deuxième processeur (1110) dans un ordonnanceur (1020), amène le deuxième processeur (1110) à réaliser les étapes de :
acquisition de la tâche créée par le serveur API (1010) pour former une file d'attente d'ordonnancement de tâches ;
acquisition d'une tâche à partir de la file d'attente d'ordonnancement de tâches pour ordonnancement, acquisition d'une ou plusieurs tâches, comportant une priorité supérieure ou égale à la priorité de la tâche, sur chacun des multiples noeuds physiques, et acquisition d'une relation correspondante entre chacun des multiples noeuds physiques et l'une ou plusieurs tâches, comportant la priorité supérieure ou égale à la priorité de la tâche, sur chacun des multiples noeuds physiques pour former une table de mappage noeud-tâche des multiples noeuds physiques ;
détermination d'un noeud physique cible satisfaisant une condition de filtrage prédéfinie pour réaliser la tâche conformément à la condition de filtrage prédéfinie et la table de mappage noeud-tâche comprenant des noeuds physiques sur lesquels la priorité de l'une ou plusieurs tâches sont supérieures ou égales à la priorité de la tâche, dans lequel la condition de filtrage prédéfinie comprend : une condition de correspondance entre un port requis par la réalisation de la tâche et un noeud physique comportant le port parmi les multiples noeuds physiques, et détermination si les ressources restantes sur le noeud physique comportant le port parmi les multiples noeuds physiques satisfont les ressources nécessaires à l'exécution de la tâche ; et
liaison de la tâche au noeud physique cible et envoi des informations de liaison au serveur API (1010) ; et
dans lequel le programme, lorsqu'il est exécuté par un troisième processeur (1110) dans le noeud physique cible parmi les multiples noeuds physiques, amène le troisième processeur (1110) à réaliser les étapes de :
surveillance des informations de liaison entre la tâche et le noeud physique cible dans le serveur API (1010), et acquisition de la tâche sur la base des informations de liaison surveillées pour former une file d'attente de tâches ;
dans un cas où le noeud physique cible traite la tâche dans la file d'attente de tâches, acquisition d'une liste de tâches de tâches en cours d'exécution sur le noeud physique cible ;
détection si les ressources restantes obtenues après que le noeud physique cible a exécuté les tâches dans la liste de tâches satisfont les ressources requises pour exécuter la tâche ;
dans un cas où les ressources requises pour exécuter la tâche sont satisfaites, exécution de la tâche ; et
dans un cas où les ressources requises pour exécuter la tâche ne sont pas satisfaites, déplacement séquentiel d'au moins une tâche comportant une priorité inférieure à la tâche dans la liste de tâches dans une file d'attente à supprimer dans un ordre de priorité de la plus basse à la plus élevée, jusqu'à ce que les ressources restantes du noeud physique cible satisfassent les ressources requises pour exécuter la tâche, adoption de la tâche pour préempter l'au moins une tâche dans la file d'attente à supprimer, et exécution de la tâche ;
dans lequel le serveur API (1010) et l'ordonnanceur (1020) sont des ensembles d'une plateforme de gestion de cluster, dans lequel la plateforme de gestion de cluster est adaptée pour gérer les multiples noeuds physiques.
